# EUROPEAN PATENT SPECIFICATION

(11) **EP 4 162 102 B1**
(45) Date of publication and mention of the grant of the patent: **28.08.2024**
(21) Application number: 21730552.3
(22) Date of filing: 01.06.2021
(51) Int. Cl.: D04H 1/4218, C03C 3/062, C03C 3/087, C03C 13/06, C03C 25/34

(54) **A METHOD FOR MANUFACTURING MAN-MADE VITREOUS FIBRES**
VERFAHREN ZUR HERSTELLUNG VON KÜNSTLICHEN GLASFASERN
PROCÉDÉ DE FABRICATION DE FIBRES VITREUSES MANUFACTURÉES

(30) Priority: 03.06.2020 EP 20178059
(43) Date of publication of application: 12.04.2023
(73) Proprietor: ROCKWOOL A/S, 2640 Hedehusene (DK)
(72) Inventor: DEKKERS, Rob, 2640 Hedehusene (DK); LEHNEN, Alfred, 2640 Hedehusene (DK); TEN HAAFT, Mathijs, 2640 Hedehusene (DK)
(74) Representative: Windsor, Louise
(86) International application number: PCT/EP2021/064627
(87) International publication number: WO 2021/245059

(56) References cited:
- WO-A1-2011/024021
- WO-A1-2012/078743
- WO-A1-2013/150123
- US-A- 3 498 770
- US-A- 3 615 310
- US-A- 4 546 880

## Description

The present invention relates to a method for manufacturing water treated man-made vitreous fibres and a method of manufacturing a man-made vitreous fibre element.

### BACKGROUND TO THE INVENTION

It is known to use man-made vitreous fibres (MMVF) to make MMVF elements such as boards, panels, and slabs. MMVF are typically bound with a cured binder composition to make the MMVF elements. The MMVF elements can be used as insulation materials and cladding.

US 4,546,880 discloses a shippable package of wet glass strands having improved payout from the package in the production of continuous strand products. The amount of moisture of the package of the strands is at least about 3 wt.% of the package.

There is a need for an improved method for manufacturing MMVF. There is a need for an environmentally friendly method of manufacture. There is a need to reduce the storage time required to condition MMVF. There is a need to reduce the packaging required for a bale of MMVF. There is a need to reduce the amount of binder used in MMVF elements while maintaining the aged bending strength. There is a need to reduce the density of MMVF elements to save on raw materials and transportation costs. There is a need to increase the aged bending strength of MMVF elements. There is a need to increase the fire class of MMVF elements. It is, therefore, an object of the present invention to seek to alleviate the above identified problems.

### SUMMARY OF THE INVENTION

According to a first aspect of the present invention, there is provided a method for manufacturing water treated man-made vitreous fibres (MMVF) comprising:
a. providing a mineral melt,
b. providing a fiberizing apparatus,
c. fiberizing the mineral melt to form man-made vitreous fibres (MMVF),
d. collecting the MMVF, and thereafter
e. applying 0.1 wt% to 1 wt% water, based on the weight of MMVF, to the MMVF to form water treated MMVF.

According to a second aspect of the present invention, there is provided a bale, mat or collection of loose fibres comprising water treated man-made vitreous fibres obtained by the method according to the first aspect of the invention.

According to a third aspect of the invention, there is provided a method of manufacturing a man-made vitreous fibre element (MMVF element), comprising:
i. providing water treated man-made vitreous fibres (MMVF) obtained by the method according to the first aspect of the invention,
ii. providing a binder,
iii. applying the binder to the MMVF to form a mixture,
iv. shaping the mixture,
v. curing the mixture to form the MMVF element.

According to a fourth aspect of the invention, there is provided a man-made vitreous fibre element (MMVF element) obtained by the method according to the third aspect of the invention.

### DETAILED DESCRIPTION

The present invention relates to a method for manufacturing water treated man-made vitreous fibres (MMVF) comprising:
a. providing a mineral melt,
b. providing a fiberizing apparatus,
c. fiberizing the mineral melt to form man-made vitreous fibres (MMVF),
d. collecting the MMVF, and thereafter applying 0.1 wt% to 1 wt% water, based on the weight of MMVF, to the MMVF to form water treated MMVF.

It is an advantage of the present invention that it provides an improved method for manufacturing MMVF. The use of water in the process is environmentally friendly as there is not a requirement for additional chemicals to be used. Surprisingly, it has been found that the water treated MMVF can be stored for a shorter period of time than untreated MMVF before using them. The conditioning occurs at a faster rate with the MMVF of the invention. This has the advantage of a more rapid manufacture process and a reduction in the storage capacity required. Furthermore, it allows MMVF to be produced closer to the time they are used, which means any peaks and troughs in demand for the fibres can be more easily managed which reduces waste and energy usage. It is known that MMVF age overtime and it is a particular advantage of the invention that conditioning occurs more rapidly.

It will be appreciated that the water treatment causes a change in the MMVF and/or its surface.

It is known to use water as a coolant as part of the process for forming MMVF, however the water is applied during the formation of the MMVF, such as in a spinning cup or a cascade spinner and prior to the collection of the MMVF. Water used as a coolant prior to collection of the MMVF is therefore different to water treatment step e. The inventors have found that the introduction of water during the fiberisation process, such as into a spinning cup or cascade spinner does not result in the advantages of the invention. It is clear therefore, that it is necessary to collect the MMVF as set out in step d.

Preferably a proportion of the water will evaporate from the MMVF after step e.

The MMVF made by the present invention are easier to form into bales and in particular do not need to be completely or partially covered by a material such as cardboard or plastic. Surprisingly, the bales hold their shape when bound by a wire or rope alone. Preferably substantially all of the surface area of the bale is not covered. Surprisingly, bales of water treated MMVF are denser than untreated MMVF.

Preferably, in step e, the temperature of the MMVF is in the range of 10°C to 100°C, preferably 30°C to 90°C, preferably 50°C to 80°C. It is an advantage that the MMVF can be treated at a wide range of temperatures. This allows the water treatment step to fit in with an existing manufacturing method and does not require excessive cooling or heating to be carried out.

Preferably, in step e, the temperature of the water is in the range of 10°C to 100°C, preferably 30°C to 90°C, preferably 50°C to 80°C. Such temperatures are convenient for manufacture.

Preferably, in step e the water is saturated steam. This provides an efficient way to apply the water. Advantageously, the saturated steam can be produced using heat from the manufacturing process. This circular use is environmentally friendly.

Preferably, in step e, the temperature of the MMVF is greater than the temperature of the water. This facilitates the water treatment step. Without being bound by theory, it is believed that a higher temperature of MMVF reduces the reaction time between the water and the MMVF and increases the evaporation of the water.

Preferably, step e comprises applying 0.2 wt% to 0.8 wt% water, based on the weight of the MMVF, to the MMVF to form water treated MMVF, preferably 0.3 wt% to 0.5 wt% water. It is advantageous to control the amount of water used in the process to balance the need to reduce water consumption while enabling the advantages of the invention.

Preferably, a mineral charge is provided and melted in a furnace to form the mineral melt.

Preferably, in step c, the mineral melt is fiberized by a spinning cup or a cascade spinner.

These are known in the art of making MMVF.

Preferably, in step c, the MMVF are cooled prior to step d. Optionally, water is used as part of the cooling process, preferably to cool the machinery and preferably the air flow. It will be appreciated that any water used for cooling, is different to the water treatment applied in step e after the MMVF have been collected in step d.

Preferably, the steps are sequential. It will be appreciated that step d occurs before step e.

Preferably steps a to e are continuous, preferably the steps are carried out in line.

Preferably, in step d, collected means aggregated, such that a plurality of MMVF form a collection of MMVF.

Preferably, in step d, the MMVF are collected on a belt, preferably a conveyor belt. The MMVF are preferably directly conveyed on the belt to the water treatment step e.

Preferably the MMVF remain substantially in the same position relative to adjacent MMVF after they are collected in step d and prior to step e.

Preferably, step e occurs about 1 second to about 15 minutes after the MMVF have been collected in step d, preferably about 10 seconds to about 10 minutes, preferably 1 minute to about 5 minutes. Preferably, the water treatment step e is provided in line when the MMVF are formed. This results in an efficient process.

Preferably after step d and before and during step e, the MMVF are subjected to a disentanglement process.

Preferably after step d and before or during step e, the MMVF are subjected to a disentanglement process.

Preferably, after step d, and during water treatment step e, the MMVF are subjected to a disentanglement process.

Preferably the disentanglement process is an airstream. Preferably the airstream has an airflow of from 1 m/s to 150 m/s, preferably 5 m/s to 80 m/s Disentanglement helps a uniform distribution of the MMVF and thus a uniform distribution of the water treatment.

Preferably the disentanglement process is as described in WO2011/012712.

Preferably, in step d, the MMVF are in the form of:
A. a web, preferably wherein the web has a thickness in the range of 5 cm to 30 cm, preferably 10 cm to 20 cm, or
B. tufts, or
C. loose fibres.

Preferably, in step d, the MMVF are in the form of a web. A web is an efficient way to make MMVF. A web can be rolled up for storage, or split into tufts when needed. In a web, the fibres are not bound together with a binder, but are entangled with adjacent fibres to form a mass of fibres. A web is wider and/or longer than its thickness. The thickness of a web is preferably measured perpendicular to the surface it has been formed on. Preferably the web is rotated about a longitudinal axis during step e. This helps the application of the water to the MMVF.

Preferably, in step d, the MMVF are in the form of a tuft. In a tuft, the fibres are not bound together with a binder, but are entangled with adjacent fibres to form a mass of fibres. A tuft may typically have a height, length, and width each independently in the range of about 5 mm to about 25 mm, preferably about 5 mm to about 20 mm. A tuft preferably has an irregular shape.

Preferably, the tufts are tumbled when the water is applied during step e. This helps the application of the water to the MMVF.

Preferably, in step d, the MMVF are in the form of loose fibres. Loose fibres are a collection of fibres which are not bound together with a binder and can be separated into individual fibres.

Preferably, the loose fibres are tumbled when the water is applied during step e. This helps the application of the water to the MMVF.

Preferably, in step e, the water is applied by spraying, preferably using a piezoelectric sprayer, an electrostatic sprayer, an ultrasonic sprayer, or a pressure sprayer. These produce water with a high surface area which helps the water to treat the MMVF.

Preferably, in step e, the top surface of the MMVF is sprayed with water and the MMVF are tumbled or rotated. Preferably, the MMVF are tumbled or rotated during step e. This helps the water to be applied to the MMVF in a consistent manner.

Preferably, in step e, the water spraying is applied by at least about one hydraulic nozzle, preferably about one to about eight hydraulic nozzles, preferably about two to about six hydraulic nozzles. This helps the water to be applied to the MMVF in a consistent manner.

Preferably, in step e, the water spraying is applied by at least about one group of hydraulic nozzles, preferably about two to about four groups of hydraulic nozzles. Preferably each group of hydraulic nozzles has about one to about eight hydraulic nozzles, preferably about two to about six hydraulic nozzles. This helps the water to be applied to the MMVF in a consistent manner.

Preferably, in step e, the water is treated water, preferably chemically and/or physically treated water, preferably filtered or purified water, preferably ion-exchange water. This has the advantage of reducing any impurities in the water.

Preferably, in step e, the water is collected from precipitation, preferably filtered precipitation. It is environmentally friendly to recycle precipitation in this method. Precipitation includes rain, sleet, snow, and hail, preferably rain.

Preferably, in step e, the water is not applied directly by precipitation, such as by being left outside, such as in the rain. This would not allow the amount of water being applied to be controlled.

Preferably, in step e, the water is in the form of droplets, preferably wherein the droplet size is 10 µm to 500 µm, preferably 100 µm to 300 µm. Droplets allow the water to be accurately applied to the MMVF and to cover a large surface area of MMVF. Droplets also allow a substantially even amount of water to be applied to the fibres.

Preferably, the MMVF are stone wool fibres or glass fibres, preferably stone wool fibres. Such materials are known to make MMVF.

Preferably, the MMVF have a diameter in the range of about 2 µm to about 10 µm, preferably about 2 µm to about 5 µm, more preferably about 3 µm to about 4 µm. Such diameters are suitable for use in MMVF elements.

The man-made vitreous fibres (MMVF) can have any suitable oxide composition. The fibres can be glass fibres, ceramic fibres, basalt fibres, slag fibres or rock or stone fibres. The fibres are preferably of the types generally known as rock, stone or slag fibres, most preferably stone fibres.

Stone fibres commonly comprise the following oxides, in percent by weight:
SiO₂: 30 to 51
CaO: 8 to 30
MgO: 2 to 25
FeO (including Fe₂O₃): 2 to 15
Na₂O+K₂O: not more than 10
CaO+MgO: 10 to 30

In preferred embodiments the MMVF have the following levels of elements, calculated as oxides in wt%:
SiO₂: at least 30, 32, 35 or 37; not more than 51, 48, 45 or 43
Al₂O₃: at least 12, 16 or 17; not more than 30, 27 or 25
CaO: at least 8 or 10; not more than 30, 25 or 20
MgO: at least 2 or 5; not more than 25, 20 or 15
FeO (including Fe₂O₃): at least 4 or 5; not more than 15, 12 or 10
FeO+MgO: at least 10, 12 or 15; not more than 30, 25 or 20
Na₂O+K₂O: zero or at least 1; not more than 10
CaO+MgO: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

The MMVF made by the method of the invention preferably have the following levels of elements, calculated as oxides in wt%:

| | |
|---|---|
| SiO₂ | 35 to 50 |
| Al₂O₃ | 12 to 30 |
| TiO2 | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3 |

Another preferred composition for the MMVF have the following levels of elements, calculated as oxides in wt%:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na2O + K2O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%

Glass fibres commonly comprise the following levels of elements, calculated as oxides in wt%:
SiO₂: 50 to 70
Al₂O₃: 10 to 30
CaO: not more than 27
MgO: not more than 12

Glass fibres can also contain the following levels of elements, calculated as oxides in wt%: Na₂O+K₂O: 8 to 18, in particular Na₂O+K₂O greater than CaO+MgO B₂O₃: 3 to 12.

Some glass fibre compositions can contain Al₂O₃: less than 2% .

In preferred embodiments the MMVF have the following levels of elements, calculated as oxides in wt%:

| | |
|---|---|
| SiO₂ | about 36 to about 41 |
| Al₂O₃ | about 18 to about 23 |
| TiO₂ | about 0.1 to about 2 |
| Fe₂O₃ | about 0.5 to about 2 |
| CaO + MgO | about 35 to about 40 |

| | |
|---|---|
| K₂O + Na₂O | about 0.5 to about 3 |
| P₂O₅ | about 0 to about 1 |
| MnO | about 0.5 to about 2 |

It will be appreciated that the amount of Fe₂O₃ quoted may include iron present as FeO.

Preferably a binder is not used in the method of manufacturing water treated MMVF as described herein.

Preferably, the method further comprises
f. forming the water treated MMVF into a bale.

A bale is a suitable way to store the MMVF. It is advantageous to store the MMVF to condition them.

Preferably, the bale can be formed from a web of MMVF, preferably wherein the web is rolled up to form the bale.

Preferably, the bale can be formed from tufts.

Preferably, the MMVF in the form of tufts or loose fibres can be stored in a container, preferably a silo. This provides a manageable way to store the MMVF.

Preferably, the method further comprises storing the MMVF for at least 1 day preferably one day to six weeks, preferably 3 days to 3 weeks This allows the fibres to be conditioned. Surprisingly, the storage time can be reduced for MMVF of the invention compared to the prior art, whilst still achieving the required properties.

Preferably, the method comprises storing the MMVF at a temperature in the range of 10 °C to 100 °C, preferably 20 °C to 75 °C, preferably 20 °C to 50 °C. These temperatures are suitable for storing the fibres

Preferably, the method comprises storing the MMVF at an absolute humidity of about 1.8 g/m³ to about 600 g/m³, preferably about 5 g/m³ to about 200 g/m³. Absolute humidity refers to the grams of water moisture per cubic meter of air. These conditions are suitable for conditioning the fibres.

Preferably the MMVF are stored in the form of a bale, a mat, or loose fibres and/or tufts in a container, preferably in the form of a bale. These are suitable ways to store the MMVF for use.

The invention relates to a bale, mat or collection of loose fibres comprising water treated man-made vitreous fibres obtainable by the method as described herein. These are suitable ways to store the MMVF for use.

The invention relates to a method of manufacturing a man-made vitreous fibre element (MMVF element), comprising
i. providing water treated man-made vitreous fibres (MMVF) obtained by the method as described herein
ii. providing a binder,
iii. applying the binder to the MMVF to form a mixture,
iv. shaping the mixture,
v. curing the mixture to form the MMVF element.

It is an advantage of the invention that the water treated MMVF can be used to make a MMVF element with improved properties. An advantage is that less binder is required when the MMVF are used to form a MMVF element, whilst maintaining the strength, such as the aged bending strength of the MMVF element. As a result, the amount of binder used in MMVF elements can be reduced while maintaining or improving the aged bending strength. The density of MMVF elements can therefore be reduced which saves on raw materials, transportation costs and reduces the weight of the building project. Further, the MMVF elements have an increased aged bending strength.

The fire class of the MMVF elements can be increased as less binder is required which means the amount of flammable material is reduced.

Preferably, step i comprises providing the water treated MMVF from a bale, mat or collection of loose fibres manufactured as described herein.

It is an advantage that MMVF can be stored and then used to make an MMVF element.

Preferably, loose fibres and tufts may be directly used in the process.

Preferably, the method comprises processing the water treated MMVF from a bale into tufts. This makes it easier to distribute the MMVF in the MMVF element. Preferably the MMVF in the bales are subject to a disentanglement process as described herein.

Preferably, in step v, the mixture is cured by applying heat and/or pressure. This has the advantage of increasing the strength of the MMVF element.

Preferably, in step v, the mixture is cured at a temperature of about 200 °C to about 400 °C, preferably about 225 °C to about 300 °C.

Preferably, in step v, the mixture is cured at a pressure of about 15 bar to about 20 bar, preferably about 16 bar to about 18 bar, preferably about 17.5 bar.

Preferably, the binder is a phenol formaldehyde based binder.

Preferably, the MMVF element has a density in the range of 900 kg/m³ to 1400 kg/m³, preferably 1000 kg/m³ to 1300 kg/m³, preferably 1050 kg/m³ to 1200 kg/m³, preferably a density of 1100 kg/m³ to 1150 kg/m³.

Such densities are particularly suitable for MMVF elements used as insulation materials or as cladding for a building. It is particularly advantageous that the density of the MMVF element falls within these ranges as surprisingly, the water treated MMVF give the resulting MMVF element a higher aged bending strength. It is desirable to reduce the weight of the MMVF element, whilst maintaining the aged bending strength and the MMVF element and this is shown in the present invention. The density of the MMVF element may be reduced by reducing the amount of binder used. This in turn improves the fire class of the MMVF element by reducing the amount of the flammable binder present.

Preferably, the method comprises applying about 5 wt% to about 15 wt% binder, based on the weight of the MMVF, preferably about 10 wt% to about 12 wt% binder. This amount of binder helps balance the density, aged bending strength and fire class of the MMVF element.

Preferably, the MMVF element has a loss on ignition (LOI) of about 5 wt% to about 15 wt%, preferably about 10 wt% to about 12 wt%. The LOI relates to the amount of binder in the MMVF element. This amount of binder helps balance the density, aged bending strength and fire class of the MMVF element.

Determination of the LOI and thus binder content is performed according to Table 2, No. 6 of EAD 090001-00-0404, dated May 2015 by heating a sample at 650 C for at least 1 hour. The percentage weight difference before and after the heat treatment is the LOI.

Preferably, the MMVF element has an aged bending strength of at least 19 N/mm² preferably 22 N/mm², preferably in the range of 22 N/mm² to 30 N/mm², preferably 25 N/mm² to 30 N/mm². Such aged bending strengths are suitable for insulation materials and cladding. Aged bending strength and initial bending strength can be measured in accordance with EAD 090001-01-0404 Prefabricated compressed mineral wool boards.

Preferably, the thickness of the MMVF element is in the range of 5 mm to 60 mm, preferably in the range of 5 mm to 30 mm, preferably in the range of 5 mm to 20 mm, preferably in the range of 10 mm to 20 mm

Preferably, the MMVF element has a width and length each independently in the range of about 20 cm to about 4 m, preferably in the range of about 50 cm to about 3.5 m, preferably in the range of about 1 m to about 3 m.

Preferably, the MMVF element is a plate, preferably a board, a panel, or a slab. Preferably, the MMVF element is used as an insulation material, or for cladding.

### Examples

### Example 1

The properties of water treated MMVF according to the invention (Group 2) were compared with those of control MMVF which were not water treated (Group 1).

### Method of making MMVF in Group 1

A combination of basalt, recycled stone wool and raw material additives was heated to a temperature of about 1500 °C . The molten material was then poured onto cascade spinning wheels to create MMVF that were quenched in an air flow. Subsequently, the MMVF in the form of tufts were collected on a conveyer. The MMVF of Group 1 were not sprayed with water and were formed into bales and stored for 4 to 6 weeks.

### Method making MMVF in Group 2

A combination of basalt, recycled stone wool and raw material additives was heated to a temperature of about 1500 °C . The molten material was then poured onto cascade spinning wheels to create MMVF that were quenched in an air flow. Subsequently, the MMVF in the form of tufts were collected on a conveyer. The MMVF of Group 2 were then sprayed with 0.3 wt % water, based on the weight of MMVF using two groups of electrically actuated hydraulic nozzles with two nozzles each, spraying the top surface before and after tumbling the MMVF tufts, respectively. Subsequently, the MMVF tufts were formed into bales and stored for 4 to 6 weeks.

### Method of making a MMVF element

The bales were then separated into flocks of MMVF and about 12 wt% of a phenol formaldehyde based binder was added to the MMVF to form a mixture. On the press line, the mixture was pressed at 17 bar into an 8 mm board and cured at a temperature of 235 °C at 100 mm/s line speed resulting in a core temperature of 200 °C to form a MMVF element. The element was a panel of approximately 8 mm thickness.

### Measurements

The loss on ignition, aged bending strength, initial bending strength, density, and thickness of the MMVF element formed using MMVF of Group 1 or Group 2 were measured and the results are shown in Table 1. The median test p-value was 0.000 in all measurements.

**Table 1**

| | **Group** | **Median** | **Number of test samples** |
|---|---|---|---|
| **Aged Strength N/mm²** | **1** | **25.87** | **2484** |
| | **2** | **28.39** | **2220** |
| **Initial Strength N/mm²** | **1** | **37.32** | **4970** |
| | **2** | **35.54** | **4450** |
| **Density kg/m³** | **1** | **1152** | **7455** |
| | **2** | **1118** | **6675** |
| **Thickness mm** | **1** | **7.88** | **7455** |
| | **2** | **7.95** | **6675** |
| **LOI %** | **1** | **12.42** | **4970** |
| | **2** | **11.91** | **4410** |

The results show that the loss on ignition was lower for the water treated M MVF elements than the control MMVF elements. This shows that less binder was used in the water treated MMVF element which reduces the amount of flammable material present.

The initial bending strength of the control MMVF element was higher than the water treated MMVF elements, however, surprisingly, the aged bending strength was higher for the water treated MMVF elements. This suggests that the water treated MMVF elements have greater stability as there is a lower loss of bending strength and a higher aged bending strength. Furthermore, it is advantageous that the aged bending strength is higher.

The density of the control MMVF elements is higher than the density of the water treated MMVF elements. It is surprising therefore, that in spite of a lower density, the water treated MMVF elements have a higher aged bending strength than the control MMVF elements.

Overall, the water treated MMVF element had a lower density, a lower loss on ignition, a shorter conditioning time and a higher aged bending strength which evidences the superior properties of the water treated MMVF of the present invention.

### Example 2

Experiments were carried out to compare the effect of water treatment and storage time.

### Method of making a MMVF element

A combination of basalt, recycled stone wool and raw material additives was heated to a temperature of about 1500 °C . The molten material was then poured onto cascade spinning wheels to create MMVF that were quenched in an air flow. Subsequently, the MMVF in the form of tufts were collected on a conveyer. The MMVF tufts were then sprayed with water, as set out in Table 2, using two groups of electrically actuated hydraulic nozzles with two nozzles each, spraying the top surface before and after tumbling the MMVF tufts, respectively. Subsequently, the MMVF were formed into bales and stored as set out in Table 2. The MMVF element was then formed as set out for Example 1.

### Measurements

The aged strength, storage time and amount of water used are shown in Table 2. The loss on ignition, aged bending strength, initial bending strength, density, and thickness of the MMVF element were measured and the results are shown in Table 2.

**Table 2**

| **Item** | **Water %** based on the weight of MMVF | **Storage weeks** | **Thickness mm** | **Density kg/m³** | **LOI %** | **Initial Strength N/mm²** | **Aged Strength N/mm²** |
|---|---|---|---|---|---|---|---|
| A | 0.340 | 2 | 7.95 | 1119 | 11.82 | 33.72 | 26.03 |
| B | 0.640 | 2 | 7.96 | 1134 | 11.92 | 35.36 | 28.32 |
| C | 0.340 | 4 | 7.92 | 1128 | 11.89 | 36.73 | 29.80 |
| D | 0.640 | 4 | 7.99 | 1142 | 12.01 | 35.87 | 28.86 |

The results show that increasing storage period from 2 to 4 weeks has a strong beneficial effect on strength in the case of low water-spraying (0.34%), while the effect is not significant in the case of increased water-spraying (0.64%). Similarly, increasing water-spraying from 0.34% to 0.64% has a significant effect on strength in the case of 2-week storage, but no significant effect after 4-week storage. The term "significant" refers to statistically significance with 95% confidence in the case of comparing the corners of the experimental design (Mann-Whitney test).

The maximum achievable strength by either water-spraying or storage time cannot lead to a performance above the physical maximum defined strength. Consequently, the effect of increasing water-spraying fades out with increasing storage time and vice versa. In other words, water-spraying enhances the conditioning of wool that takes place during storage. Notice, that the above conclusions apply to increasing water-spraying. The effect of water-spraying compared to no water-spraying is significant and shown in Example 1.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

Within this specification, the term "about" means plus or minus 20%, more preferably plus or minus 10%, even more preferably plus or minus 5%, most preferably plus or minus 2%.

Within this specification, the term "substantially" means a deviation of plus or minus 20%, more preferably plus or minus 10%, even more preferably plus or minus 5%, most preferably plus or minus 2%.

Within this specification, reference to "substantially" includes reference to "completely" and/or "exactly". That is, where the word substantially is included, it will be appreciated that this also includes reference to the particular sentence without the word substantially.

## Claims

1. A method for manufacturing water treated man-made vitreous fibres (MMVF) comprising:
a. providing a mineral melt,
b. providing a fiberizing apparatus,
c. fiberizing the mineral melt to form man-made vitreous fibres (MMVF),
d. collecting the MMVF, and **characterised by** thereafter
e. applying 0.1 wt% to 1 wt% water, based on the weight of MMVF, to the MMVF to form water treated MMVF.

2. A method according to claim 1, wherein in step e, the temperature of the MMVF is in the range of 10°C to 100°C, preferably 30°C to 90°C, preferably t 50°C to 80°C, and/or
wherein in step e, the temperature of the water is in the range of 10°C to 100°C, preferably 30°C to 90°C, preferably 50°C to 80°C.

3. A method according to any preceding claim, wherein step e comprises applying 0.2 wt% to 0.8 wt% water, based on the weight of the MMVF, to the MMVF to form water treated MMVF, preferably 0.3 wt% to 0.5 wt% water.

4. A method according to any preceding claim, wherein in step d, the MMVF are in the form of:
A. a web, preferably wherein the web has a thickness in the range of 5 cm to 30 cm, preferably 10 cm to 20 cm, or
B. tufts, or
C. loose fibres.

5. A method according to any preceding claim, wherein in step e, the water is applied by spraying, preferably using a piezoelectric sprayer, an electrostatic sprayer, an ultrasonic sprayer, or a pressure sprayer; and/or
wherein the water is treated water, preferably chemically and/or physically treated water, preferably filtered or purified water, preferably ion-exchange water; and/or wherein the water is in the form of droplets, preferably wherein the droplet size is 10 µm to 500 µm, preferably 100 µm to 300 µm.

6. A method according to any preceding claim, wherein after step d and before and/or during step e, the MMVF are subjected to a disentanglement process, preferably wherein the disentanglement process is an airstream, preferably wherein the airstream has an airflow of from 1 m/s to 150 m/s, preferably 5 m/s to 80 m/s.

7. A method according to any preceding claim, further comprising f. forming the water treated MMVF into a bale.

8. A method according to any preceding claim, further comprising storing the MMVF for at least 1 day, preferably one day to six weeks, preferably 3 days to 3 weeks.

9. A method according to claim 8, comprising storing the MMVF at a temperature in the range of 10 °C to 100 °C, preferably 20 °C to 75 °C, preferably 20 °C to 50 °C; and/or
comprising storing the MMVF at an absolute humidity of 1.8 g/m³ to 600 g/m³, preferably a 5 g/m³ to 200 g/m³.

10. A method according to any of claims 1 to 9 wherein a binder is not used therein.

11. A bale, mat or collection of loose fibres comprising water treated man-made vitreous fibres obtained by the method according to any of claims 1 to 10.

12. A method of manufacturing a man-made vitreous fibre element (MMVF element), comprising:
i. providing water treated man-made vitreous fibres (MMVF) obtained by the method according to any of claims 1 to 10,
ii. providing a binder,
iii. applying the binder to the MMVF to form a mixture,
iv. shaping the mixture,
v. curing the mixture to form the MMVF element.

13. A method according to claim 12, comprising processing the water treated MMVF from a bale into tufts.

14. A method according to claim 12 or claim 13, wherein the MMVF element has a density in the range of 900 kg/m³ to 1400 kg/m³, preferably 1000 kg/m³ to 1300 kg/m³, preferably 1050 kg/m³ to 1200 kg/m³, preferably a density of 1100 kg/m³ to 1150 kg/m³, and/or
comprising applying 5 wt% to 15 wt% binder, based on the weight of the MMVF, preferably 10 wt% to 12 wt% binder.

15. A method according to any of claims 12 to 14, wherein the MMVF element has an aged bending strength of at least 19 N/mm², preferably about 22 N/mm², preferably in the range of 22 N/mm² to 30 N/mm², preferably 25 N/mm² to 30 N/mm², wherein the aged bending strength is measured in accordance with EAD 090001-01-0404.

16. A method according to any of claims 12 to 15, wherein the thickness of the MMVF element is in the range of 5 mm to 60 mm, preferably in the range of 5 mm to 30 mm, preferably in the range of 5 mm to 20 mm, preferably in the range of 10 mm to 20 mm; and/or
wherein the MMVF element is a plate, preferably a board, a panel, or a slab.

17. A man-made vitreous fibre element (MMVF element) obtained by the method of any of claims 12 to 16.

## Patentansprüche

1. Verfahren zur Herstellung von mit Wasser behandelten künstlichen Glasfasern (MMVF), umfassend:
a. Bereitstellen einer Mineralschmelze,
b. Bereitstellen einer Zerfaserungsvorrichtung,
c. Zerfasern der Mineralschmelze, um künstliche Glasfasern (MMVF) zu bilden,
d. Sammeln der MMVF und **gekennzeichnet durch**
danach
e. Auftragen von 0,1 Gew.-% bis 1 Gew.-% Wasser, basierend auf dem Gewicht der MMVF, auf die MMVF, um mit Wasser behandelte MMVF zu bilden.

2. Verfahren nach Anspruch 1, wobei in Schritt e die Temperatur der MMVF in dem Bereich von 10 °C bis 100 °C, bevorzugt 30 °C bis 90 °C, bevorzugt 50 °C bis 80 °C liegt, und/oder
wobei in Schritt e die Temperatur des Wassers in dem Bereich von 10 °C bis 100 °C, bevorzugt 30 °C bis 90 °C, bevorzugt 50 °C bis 80 °C liegt.

3. Verfahren nach einem vorhergehenden Anspruch, wobei Schritt e Auftragen von 0,2 Gew.-% bis 0,8 Gew.-% Wasser, basierend auf dem Gewicht der MMVF, auf die MMVF, um mit Wasser behandelte MMVF zu bilden, umfasst, bevorzugt 0,3 Gew.-% bis 0,5 Gew.-% Wasser.

4. Verfahren nach einem vorhergehenden Anspruch, wobei in Schritt d die MMVF in der folgenden Form sind:
A. eine Bahn, wobei bevorzugt die Bahn eine Dicke in dem Bereich von 5 cm bis 30 cm, bevorzugt 10 cm bis 20 cm aufweist, oder
B. Büschel, oder
C. lose Fasern.

5. Verfahren nach einem vorhergehenden Anspruch, wobei in Schritt e das Wasser durch Sprühen aufgetragen wird, bevorzugt unter Verwendung eines piezoelektrischen Sprühers, eines elektrostatischen Sprühers, eines Ultraschallsprühers oder eines Drucksprühers; und/oder
wobei das Wasser behandeltes Wasser ist, bevorzugt chemisch und/oder physikalisch behandeltes Wasser, bevorzugt gefiltertes oder gereinigtes Wasser, bevorzugt Ionenaustauschwasser; und/oder wobei das Wasser in der Form von Tröpfchen ist, wobei bevorzugt die Tröpfchengröße 10 µm bis 500 µm, bevorzugt 100 µm bis 300 µm ist.

6. Verfahren nach einem vorhergehenden Anspruch, wobei nach Schritt d und vor und/oder während Schritt e die MMVF einem Entwirrungsprozess unterzogen werden, wobei bevorzugt der Entwirrungsprozess ein Luftstrom ist, wobei bevorzugt der Luftstrom eine Luftströmung von 1 m/s bis 150 m/s, bevorzugt 5 m/s bis 80 m/s aufweist.

7. Verfahren nach einem vorhergehenden Anspruch, ferner umfassend
f. Bilden der mit Wasser behandelten MMVF zu einem Ballen.

8. Verfahren nach einem vorhergehenden Anspruch, ferner umfassend Lagern der MMVF für zumindest 1 Tag, bevorzugt einen Tag bis sechs Wochen, bevorzugt 3 Tage bis 3 Wochen.

9. Verfahren nach Anspruch 8, umfassend Lagern der MMVF bei einer Temperatur in dem Bereich von 10 °C bis 100 °C, bevorzugt 20 °C bis 75 °C, bevorzugt 20 °C bis 50 °C; und/oder
umfassend Lagern der MMVF bei einer absoluten Feuchtigkeit von 1,8 g/m³ bis 600 g/m³, bevorzugt 5 g/m³ bis 200 g/m³.

10. Verfahren nach einem der Ansprüche 1 bis 9, wobei kein Bindemittel darin verwendet wird.

11. Ballen, Matte oder Sammlung von losen Fasern, die mit Wasser behandelte künstliche Glasfasern umfassen, die durch das Verfahren nach einem der Ansprüche 1 bis 10 erhalten werden.

12. Verfahren zur Herstellung eines künstlichen Glasfaserelements (MMVF-Element), umfassend:
i. Bereitstellen von mit Wasser behandelten künstlichen Glasfasern (MMVF), die durch das Verfahren nach einem der Ansprüche 1 bis 10 erhalten werden,
ii. Bereitstellen eines Bindemittels,
iii. Auftragen des Bindemittels auf die MMVF, um eine Mischung zu bilden,
iv. Formgeben der Mischung,
v. Aushärten der Mischung, um das MMVF-Element zu bilden.

13. Verfahren nach Anspruch 12, umfassend Verarbeiten der mit Wasser behandelten MMVF aus einem Ballen zu Büscheln.

14. Verfahren nach Anspruch 12 oder Anspruch 13, wobei das MMVF-Element eine Dichte in dem Bereich von 900 kg/m³ bis 1400 kg/m³, bevorzugt 1000 kg/m³ bis 1300 kg/m³, bevorzugt 1050 kg/m³ bis 1200 kg/m³, bevorzugt eine Dichte von 1100 kg/m³ bis 1150 kg/m³ aufweist, und/oder
umfassend Auftragen von 5 Gew.-% bis 15 Gew.-% Bindemittel, basierend auf dem Gewicht der MMVF, bevorzugt 10 Gew.-% bis 12 Gew.-% Bindemittel.

15. Verfahren nach einem der Ansprüche 12 bis 14, wobei das MMVF-Element eine gealterte Biegefestigkeit von zumindest 19 N/mm², bevorzugt etwa 22 N/mm², bevorzugt in dem Bereich von 22 N/mm² bis 30 N/mm², bevorzugt 25 N/mm² bis 30 N/mm² aufweist, wobei die gealterte Biegefestigkeit gemäß EAD 090001-01-0404 gemessen wird.

16. Verfahren nach einem der Ansprüche 12 bis 15, wobei die Dicke des MMVF-Elements in dem Bereich von 5 mm bis 60 mm, bevorzugt in dem Bereich von 5 mm bis 30 mm, bevorzugt in dem Bereich von 5 mm bis 20 mm, bevorzugt in dem Bereich von 10 mm bis 20 mm liegt, und/oder
wobei das MMVF-Element eine Platte, bevorzugt ein Brett, eine Tafel oder eine Bramme ist.

17. Künstliches Glasfaserelement (MMVF-Element), das durch das Verfahren nach einem der Ansprüche 12 bis 16 erhalten wird.

## Revendications

1. Procédé de fabrication de fibres vitreuses manufacturées (MMVF) traitées à l'eau comprenant :
a. la fourniture d'une fonte minérale,
b. la fourniture d'un appareil de fibrage,
c. le fibrage de la fonte minérale pour former des fibres vitreuses manufacturées (MMVF),
d. la collecte des MMVF, et caractérisé ensuite par
e. l'application de 0,1 % en poids à 1 % en poids d'eau, sur la base du poids des MMVF, aux MMVF pour former des MMVF traitées à l'eau.

2. Procédé selon la revendication 1, dans lequel à l'étape e, la température des MMVF est comprise dans la plage de 10° C à 100° C, de préférence de 30° C à 90° C, de préférence de 50° C à 80° C, et/ou
dans lequel, à l'étape e, la température de l'eau est comprise dans la plage de 10° C à 100° C, de préférence de 30° C à 90° C, de préférence de 50° C à 80° C.

3. Procédé selon l'une quelconque des revendications précédentes, dans lequel l'étape e comprend l'application de 0,2 % en poids à 0,8 % en poids d'eau, sur la base du poids des MMVF, aux MMVF pour former des MMVF traitées à l'eau, de préférence de 0,3 % en poids à 0,5 % en poids d'eau.

4. Procédé selon l'une quelconque des revendications précédentes, dans lequel à l'étape d, les MMVF se présentent sous la forme de :
A. une bande, de préférence dans lequel la bande a une épaisseur comprise entre 5 cm et 30 cm, de préférence entre 10 cm et 20 cm, ou
B. des touffes, ou
C. des fibres lâches.

5. Procédé selon l'une quelconque des revendications précédentes, dans lequel à l'étape e, l'eau est appliquée par pulvérisation, de préférence en utilisant un pulvérisateur piézoélectrique, un pulvérisateur électrostatique, un pulvérisateur à ultrasons ou un pulvérisateur à pression ; et/ou
dans lequel l'eau est de l'eau traitée, de préférence de l'eau traitée chimiquement et/ou physiquement, de préférence de l'eau filtrée ou purifiée, de préférence de l'eau échangeuse d'ions ; et/ou dans lequel l'eau est sous forme de gouttelettes, de préférence dans lequel la taille des gouttelettes est de 10 µm à 500 µm, de préférence de 100 µm à 300 µm.

6. Procédé selon l'une quelconque des revendications précédentes, dans lequel après l'étape d et avant et/ou pendant l'étape e, les MMVF sont soumises à un processus de démêlage, de préférence dans lequel le processus de démêlage est un flux d'air, de préférence dans lequel le flux d'air présente un débit d'air de 1 m/s à 150 m/s, de préférence 5 m/s à 80 m/s.

7. Procédé selon l'une quelconque des revendications précédentes, comprenant en outre
f. la formation des MMVF traitées à l'eau en une balle.

8. Procédé selon l'une quelconque des revendications précédentes, comprenant en outre le stockage des MMVF pendant au moins 1 jour, de préférence un jour à six semaines, de préférence 3 jours à 3 semaines.

9. Procédé selon la revendication 8, comprenant le stockage des MMVF à une température comprise dans la plage de 10° C à 100° C, de préférence de 20° C à 75° C, de préférence de 20° C à 50° C ; et/ou
comprenant le stockage des MMVF à une humidité absolue de 1,8 g/m³ à 600 g/m³, de préférence de 5 g/m³ à 200 g/m³.

10. Procédé selon l'une quelconque des revendications 1 à 9, dans lequel aucun liant n'est utilisé.

11. Balle, matelas ou collection de fibres lâches comprenant des fibres vitreuses manufacturées traitées à l'eau obtenues par le procédé selon l'une quelconque des revendications 1 à 10.

12. Procédé de fabrication d'un élément en fibre vitreuse manufacturée (élément MMVF), comprenant :
i. la fourniture de fibres vitreuses manufacturées (MMVF) traitées à l'eau obtenues par le procédé selon l'une quelconque des revendications 1 à 10,
ii. la fourniture d'un liant,
iii. l'application du liant sur les MMVF pour former un mélange,
iv. le façonnage du mélange,
v. le durcissement du mélange pour former l'élément MMVF.

13. Procédé selon la revendication 12, comprenant le traitement des MMVF traitées à l'eau depuis une balle en touffes.

14. Procédé selon la revendication 12 ou la revendication 13, dans lequel l'élément MMVF a une densité comprise dans la plage de 900 kg/m³ à 1400 k/m³, de préférence de 1000 kg/m³ à 1300 kg/m³, de préférence de 1050 kg/m³ à 1200 kg/m³, de préférence une densité de 1100 kg/m³ à 1150 kg/m³, et/ou
comprenant l'application de 5 % en poids à 15 % en poids de liant, sur la base du poids des MMVF, de préférence de 10 % en poids à 12 % en poids de liant.

15. Procédé selon l'une quelconque des revendications 12 à 14, dans lequel l'élément MMVF a une résistance à la flexion après vieillissement d'au moins 19 N/mm², de préférence d'environ 22 N/mm², de préférence dans la plage de 22 N/mm² à 30 N/mm², de préférence de 25 N/mm² à 30 N/mm², dans lequel la résistance à la flexion après vieillissement est mesurée conformément à EAD 090001-01-0404.

16. Procédé selon l'une quelconque des revendications 12 à 15, dans lequel l'épaisseur de l'élément MMVF est comprise dans la plage de 5 mm à 60 mm, de préférence dans la plage de 5 mm à 30 mm, de préférence dans la plage de 5 mm à 20 mm, de préférence dans la plage de 10 mm à 20 mm ; et/ou
dans lequel l'élément MMVF est une plaque, de préférence une planche, un panneau ou une dalle.

17. Élément en fibre vitreuse manufacturée (élément MMVF) obtenu par le procédé selon l'une quelconque des revendications 12 à 16.
